(19) Europäisches Patentamt

European Patent Office

Office européen des brevets

(11) EP 0 872 368 A2

(12) **EUROPEAN PATENT APPLICATION**

(43) Date of publication:
**21.10.1998 Bulletin 1998/43**

(51) Int Cl.$^6$: **B60H 1/00**

(21) Application number: **98302963.8**

(22) Date of filing: **16.04.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1997 JP 115187/97**

(71) Applicant: **Sanden Corporation**
**Isesaki-shi, Gunma 372-8502 (JP)**

(72) Inventor: **Inoue, Atsuo**
**Isesaki-shi, Gunma 372-8502 (JP)**

(74) Representative: **Jackson, Peter Arthur**
**GILL JENNINGS & EVERY**
**Broadgate House**
**7 Eldon Street**
**London EC2M 7LH (GB)**

(54) **Air conditioning apparatus for vehicle**

(57)    An air conditioning apparatus for a vehicle that controls a thermal perception that a passenger feels is disclosed. The air conditioning apparatus according to the present invention includes a thermal feeling index estimation unit (76) for calculating an estimate of a thermal perception index that the passenger feels, based on ambient temperature, quantity of direct sunlight, room temperature, and a blower control voltage. The air conditioning apparatus also includes a thermal perception index setting unit (75) for setting the passenger's desired thermal perception value; and thermal perception maintaining unit (77) to control the air flow and the outlet air temperature based on the difference between above two thermal perception index values. The air conditioning apparatus of the present invention is capable of maintaining a truly comfortable air condition by first controlling the thermal perception of the passenger.

Fig. 5

## Description

The present invention relates to air conditioning apparatus for vehicles, and, more particularly, to air conditioning apparatus with which a passenger in a vehicle may set a desired thermal perception, and one which can maintain that thermal perception in a vehicle compartment precisely and comfortably.

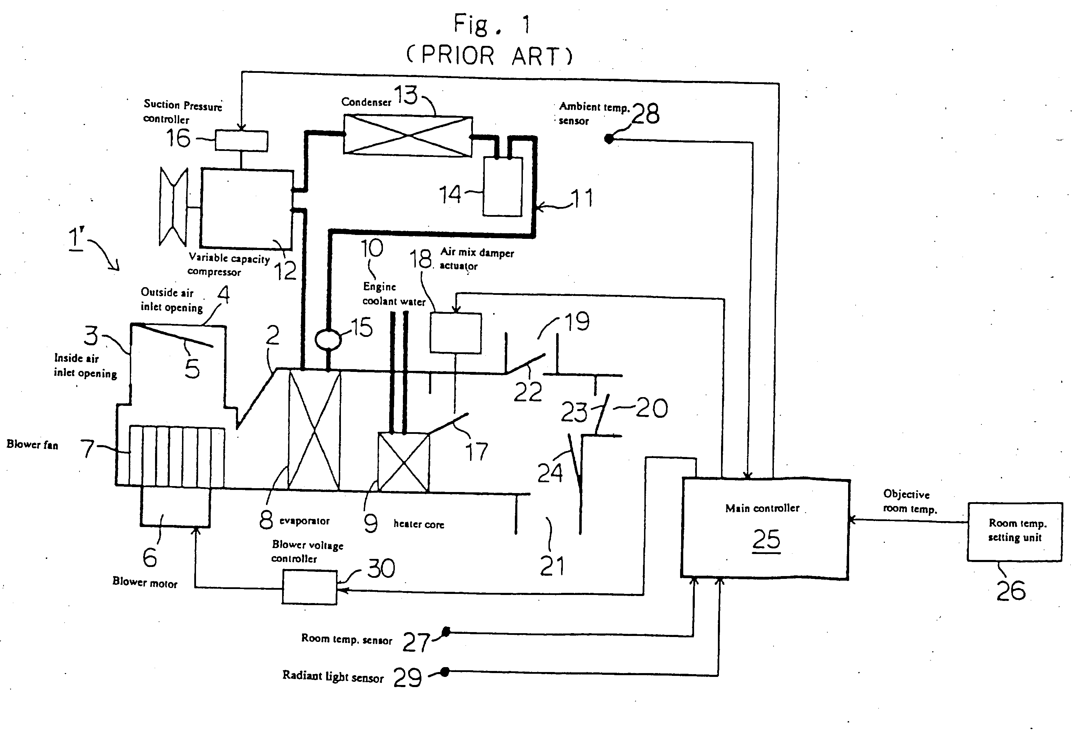

Referring to **Fig. 1**, a known air conditioning apparatus 1' is shown. Within ventilation duct 2, a blower, which includes blower fan 7 and blower motor 6, evaporator 8, and heater core 9 are arranged in a sequential manner. At the inlet of ventilation duct 2, inside air inlet opening 3 and outside air inlet opening 4 are provided. Air introduced into ventilation duct 2 may be selected either from air inside the passenger compartment, or from air outside the passenger compartment, by switching damper 5, in accordance with a passenger's selection. At the outlet of ventilation duct 2, three air discharge ports, 19, 20, and 21 (each corresponding to a specific output location, *e.g.*, DEF, VENT, and FOOT, respectively) are provided. Each ofthrce air discharge ports 19, 20, and 21, is provided with damper 22, 23, and 24, respectively, which is opened or closed in accordance with the passenger's selection.

Refrigerant circuit 11 comprises expansion valve 15, evaporator 8, variable capacity compressor 12, condenser 13, and reservoir tank 14. Suction pressure controller 16 regulates the suction pressure of the refrigerant gas sucked into variable capacity compressor 12, and thus adjusts the refrigerating power of refrigerant circuit 11. In other words, the ability of evaporator 8 to cool the air flowing within ventilation duct 2 is controlled by suction pressure controller 16.

Coolant water 10 from the engine of the vehicle is circulated through heater core 9. Air damper 17 is provided for heater core 9, and is located immediately downstream of heater core 9. Air mix damper 17 adjusts the relative quantities of air flowing through heater core 9 and air bypassing heater core 9. Air mix damper actuator 18 regulates the position of air mix damper 17. In other words, the ability of heater core 9 to heat the air flowing through ventilation duct 2 is controlled by air mix damper actuator 18.

Air drawn by the blower from inside air inlet opening 3, or outside air inlet opening 4, is sent in downstream within ventilation duct 2. Air flowing within ventilation duct 2 is first cooled by evaporator 8, and is then warmed by heater core 9.

The air quantity flowing within ventilation duct 2 is regulated by blower voltage controller 30, which controls the voltage supplied to blower motor 6. Suction pressure controller 16 controls the degree of cooling of the air, and air mix damper actuator 18 controls the degree of warming of the air. These three controllers condition the air, and the conditioned air flows out of air discharge ports 19, 20, or 21.

Ambient temperature sensor 28, room temperature sensor 27, radiant light sensor 29, and room temperature setting unit 26 generate signals, and these signals are input into main controller 25. Main controller 25 processes these signals, and outputs control signals to the three controllers, *i.e.*, blower voltage controller 30, suction pressure controller 16, and air mix damper actuator 18.

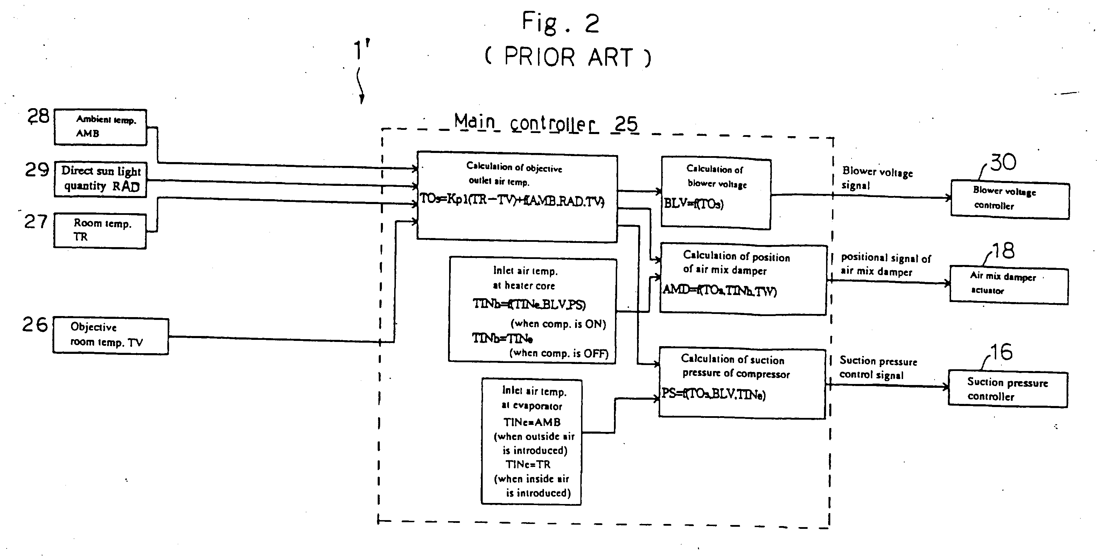

Referring to **Fig. 2**, a signal processing chart of main controller 25 is shown. Ambient temperature sensor 28 sends ambient temperature signal AMB to main controller 25. Radiant light sensor 29 detects the amount of sunlight shining on sensor 29 and sends sunlight quantity signal RAD to main controller 25. Room temperature sensor 27 sends room temperature signal TR to main controller 25. Room temperature setting unit 26 sends objective room temperature signal TV to main controller 25. Using the above signals, main controller 25 calculates objective outlet air temperature TOs according to the following equation:

$$TOs= Kpl(TR-TV) + f(AMB, RAD, TV) \qquad (1)$$

where Kpl is a constant, and f is an appropriately designed function that may be linear in AMB, RAD, and TV, with negative dependence on AMB and RAD. After the determination of objective outlet air temperature TOs, the value of control signals for the three controllers, *i.e.*, blower voltage controller 30, suction pressure controller 16, and air mix damper actuator 18 are determined.

Output signal BLV to blower voltage controller 30 is given by:

$$BLV= f(TOs) \qquad (2)$$

where f is an appropriately designed function.

Output signal AMD to air mix damper actuator 18 is given by:

$$AMD= f(TOs, TINh, TW) \qquad (3)$$

where f is an appropriately designed function, and TW is a temperature of the engine coolant water circulating heater core 9.

The value of TINh is given by:

$$TINh = f(TINe, BLV, PS) \quad \text{(when the compressor is ON)}$$
$$= TINe \quad \text{(when the compressor is OFF)}$$

where f is an appropriately designed function, BLV is given by equation (2), and PS is given by equation (4), below.

The value of TINe is defined by:

$$TINe = AMB \quad \text{(when outside air is introduced.)}$$
$$= TR \quad \text{(when inside air is introduced.)}$$

Lastly, the output signal PS to suction pressure controller 16 is defined by,

$$PS = f(TOs, BLV, TINe) \tag{4}$$

where the value of BLV is given by equation (2), and f is an appropriately designed function.

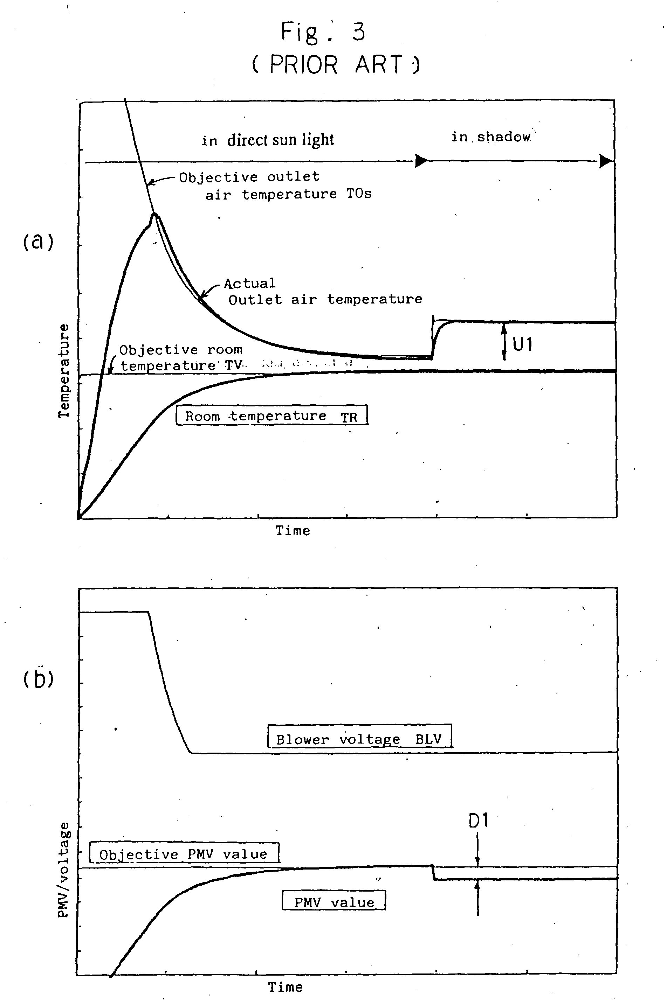

Known air conditioning apparatus 1' shows a typical responsive behavior against a change in an external condition. Referring to **Fig. 3(a)**, a response of air conditioning apparatus 1' when a vehicle moves from the direct sunlight and into the shadows is illustrated. With reference to **Fig. 2**, when the vehicle moves into the shadows, radiant light sensor 29 detects a decrease in direct sunlight quantity, and sends a corresponding signal, RAD, representing that information to main controller 25. Main controller 25 calculates objective outlet temperature TOs, which rises due to a decrease in RAD, the second term of equation **(1)**.

In **Fig. 3(a)**, the upper thin curve indicates objective outlet air temperature TOs, and the upper bold curve represents the actual outlet air temperature. The rise in the actual outlet air temperature is indicated by U1. In **Fig. 3(a)**, the lower thin horizontal line indicates objective room temperature TV, and lower bold curve indicates room temperature TR. As show in by this figure, although the actual outlet air temperature rises by U1, room temperature TR stays at approximately the same value. Referring again to **Fig. 2,** known air conditioning apparatus 1' maintains room temperature TR to be the same as objective room temperature TV, set in room temperature setting unit 26. Thus, known air conditional apparatus 1' controls the room temperature to become a desired value, which is set by the passenger, and continuously maintains this value.

However, the degree of comfortableness afforded by an air conditioning apparatus does not depend solely on the room temperature. Generally, the degree of comfortableness a passenger perceives, hereinafter referred to as the passenger's "thermal perception," depends on several factors, including, <u>inter alia</u>, the passenger's metabolic rate, the amount of clothing the passenger is wearing, the air temperature, the radiation temperature, the air flow, and the humidity. In the design of an air conditioning apparatus for a vehicle, the most important factors are the air temperature, the radiation temperature, the air flow, and the clothing amount. In other words, they are the room temperature in the vehicle, the ambient temperature outside the vehicle, the quantity of sunlight directed onto the outside the vehicle, the air flow quantity discharged from the air conditioning apparatus, and the amount of clothing the passenger is wearing,

An index which expresses this thermal perception, in numbers, is the seven-point Predicted Mean Vote (PMV) value system, and is provided in International Organization for Standardization, ISO 7730, the disclosure of which is incorporated by reference:

| PMV | +3 | +2 | +1 | 0 | -1 | -2 | -3 |
|---|---|---|---|---|---|---|---|
| Thermal perception | hot | warm | slightly warm | neutral | slightly cool | cool | cold |

The PMV value is based on heat balance of the human body. A person is in thermal balance when the internal heat production in the body is equal to the loss of heat to the environment. In a moderate environment, a person's thermoregulator system will automatically try to modify the skin temperature and the sweat secretion to maintain heat balance.

An exact value for PMV may be calculated from the various parameters such as the metabolic quantity, the amount of clothing the passenger is wearing, the air temperature, the radiation temperature, the air flow, and the humidity. The detailed definitive equation is given by the following equation:

$$PMV = (0.303\, e^{-0.036M} + 0.028)\, [(M - W) - 3.05$$

$$\times\, 10^{-3} \times [5733 - 6.99\, (M - W) - p_a] - 0.42$$

$$\times\, [(M - W) - 58.15] - 1.7$$

$$\times\, 10^{-5} M\, (5867 - p_a)$$

$$- 0.0014 M(34 - t_a) - 3.96 \times 10^{-8} f_{cl}$$

$$\times\, [(f_{cl} + 273)^4 - \overline{t}_r + 273)^4] - f_{cl} h_c (t_{cl} - t_a\,)$$

where

$t_{cl} =$    $35.7 - 0.028(M - W) - I_{cl}[3.96 \times 10^{-8} f_{cl} \times [(t_{cl} + 273)^4 - (t_r + 273)^4] + f_{cl} h_c (t_{cl} - t_a)]$;

$h_c =$    $2.38(t_{cl} - t_a)^{0.25}$ for $2.38\, (t_{cl} - t_a)^{0.25} > 12.1 \sqrt{v_{ar}}$

      $12.1 \sqrt{v_{ar}}$ for $2.38\, (t_{cl} - t_a)^{0.25} < 12.1 \sqrt{v_{ar}}$

$f_{cl} =$    $1.00 + 1.290\, I_{cl}$ for $I_{cl} \le 0.078$ m$^2$*C/W

      $1.05 + 0.645\, I_{cl}$ for $I_{cl} > 0.078$ m$^2$*C/W

where

PMV   is the predicted mean vote;

$M$      is the metabolic rate, in watts per square meter of body surface area;

$W$      is the external work, in watts per square meter, equal to zero for most activities;

$I_{cl}$      is the thermal resistance of clothing, in square meters degrees Celsius per watt;

$f_{cl}$      is the ratio of a person's surface area while clothed to man's surface area while nude;

$t_a$      is the air temperature, in degrees Celsius;

$t_r$      is the mean radiant temperature, in degrees Celsius;

$v_{ar}$     is the relative air velocity (relative to the human body) in meters per second;

$p_a$      is the partial water vapor pressure, in Pascals;

$h_c$      is the convective heat transfer coefficient, in watts per square meter degrees Celsius; and

$t_{cl}$      is the surface temperature of clothing, in degrees Celsius.

The PMV value becomes a measurable quantity if assumptions concerning the value *of* some of the parameters (e.g., the metabolic rate, clothing amount, and humidity) are made, or if these parameters are measured or otherwise determined and input.

Referring **Fig. 3(b)**, the lower bold curve indicates an estimated PMV value. As is indicated by D1, the PMV value decreases stepwise when the vehicle moves from the direct sunlight and into shadow, indicating that the passenger experiences a thermal perception that is not the *desired* one. Although the room temperature does not change significantly, the passenger feels slightly cool and uncomfortable.

Likewise, a change in the PMV value may be caused by the changes in the air flow quantity or in the ambient temperature, giving the passenger an undesired thermal perception. This problem arises because the known air conditioning apparatus 1' controls the value for room temperature TR first. Accordingly, if it is possible to control the PMV value or other thermal perception index first instead of controlling the room temperature TR first, the performance of an air conditioning apparatus will improve.

Therefore, a need has arisen for an air conditioning apparatus that controls a thermal perception index first. Accordingly, it is a technical advantage ofthe present invention to provide a vehicular air conditioning apparatus that conditions air, based on a thermal perception index. Another technical advantage ofthe present invention it that it provides a vehicular air conditioning apparatus that determines the thermal perception index inside of a vehicle, from several state variables, and controls the thermal perception index inside the vehicle to reach and maintain a passenger's desired level.

The air conditioning apparatus of the present invention comprises a blower, an evaporator, a heater core, and an air mix damper, which are arranged sequentially within the ventilation duct, and a refrigeration circuit. Room temperature sensor, ambient temperature sensor, and radiant light sensor are connected to a main controller. A thermal perception index setting unit is further connected to the main controller. The main controller processes signals originating from these sensors, and provides control signals for a blower voltage controller, a suction pressure controller, and a air mix damper actuator.

The air conditioning apparatus of the present invention presumes the current PMV value, *i.e.*, one type of thermal perception index, by calculating it from several state variables, and the controls the blower, the evaporator, and the air mix damper, based upon a difference between the presumed PMV value and the passenger's desired PMV value, set in a PMV value setting unit.

Other features of this invention will be understood from the following detailed description of preferred embodiments with reference to the drawings, in which:

**Fig. 1** is a hardware diagram of a known air conditioning apparatus.

**Fig. 2** is a control flow diagram of a known air conditioning apparatus.

**Fig. 3** is a simulation diagram of response characteristics of a known air conditioning apparatus.

**Fig. 4** is a first control embodiment of the present invention of an air conditioning apparatus.

**Fig. 5** is a second control embodiment of the present invention of an air conditioning apparatus.

**Fig. 6** is a hardware diagram of an air conditioning apparatus according to the second control embodiment of the present invention.

**Fig. 7** is a control flow diagram of an air conditioning apparatus of **Fig. 6**.

**Fig. 8** is a diagram of the functional relationship for determining the blower voltage.

**Fig. 9** is a simulation diagram of a response characteristic of an air conditioning apparatus of **Fig. 6**.

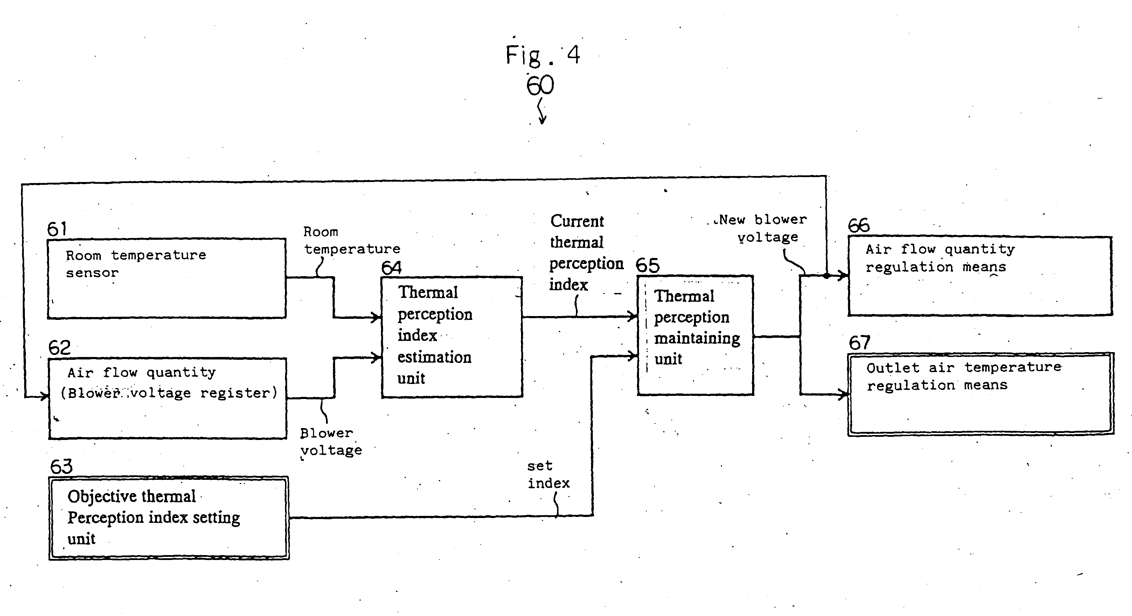

Referring to **Fig. 4**, a first control embodiment 60 of the present invention is shown. In box 64, the current thermal perception index is calculated from room temperature sensor 61 and current blower voltage 62. Based on the difference between the calculated thermal perception index and the thermal perception index set in box 63, a new blower control voltage and outlet air temperature are computed in box 65, and are sent to air flow quantity regulation means 66, and to outlet air temperature regulation means 67.

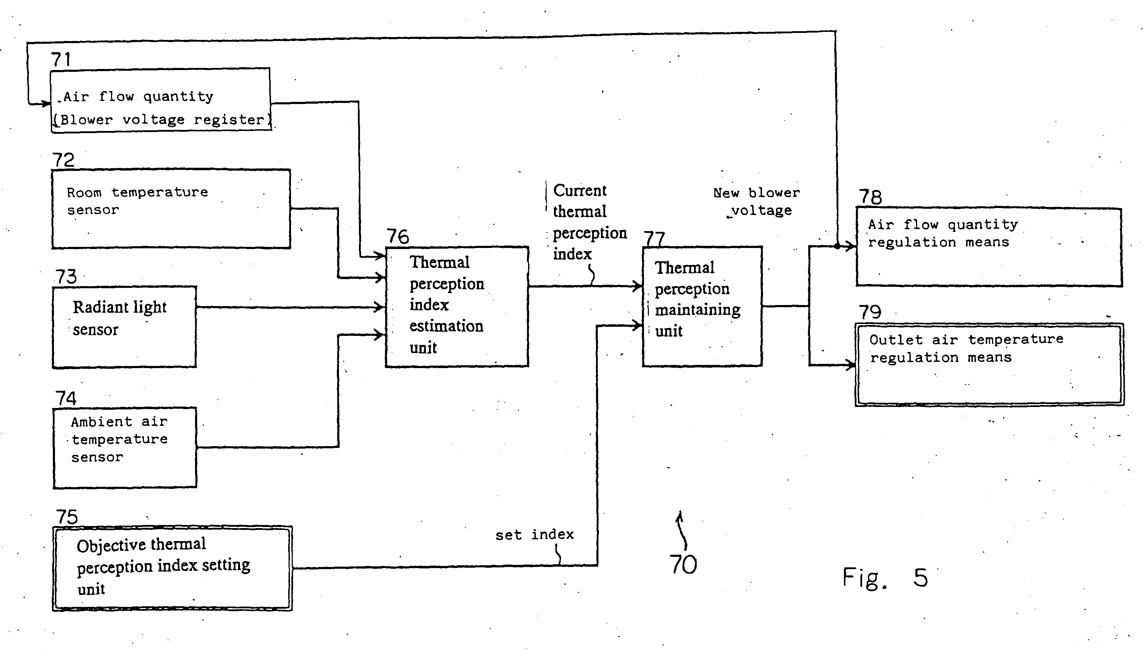

Referring to **Fig. 5**, a second control embodiment 70 of the present invention of an air conditioning apparatus is depicted. In box 76, the current thermal perception index is calculated from current blower voltage 71, room temperature 72, direct sunlight quantity 73, and ambient temperature 74. Based on the difference between the calculated thermal perception index and the thermal perception index, which is set in box 75, new blower control voltage and outlet air temperature are computed in box 77, and are sent to air flow quantity regulation means 78 and outlet air temperature regulations means 79.

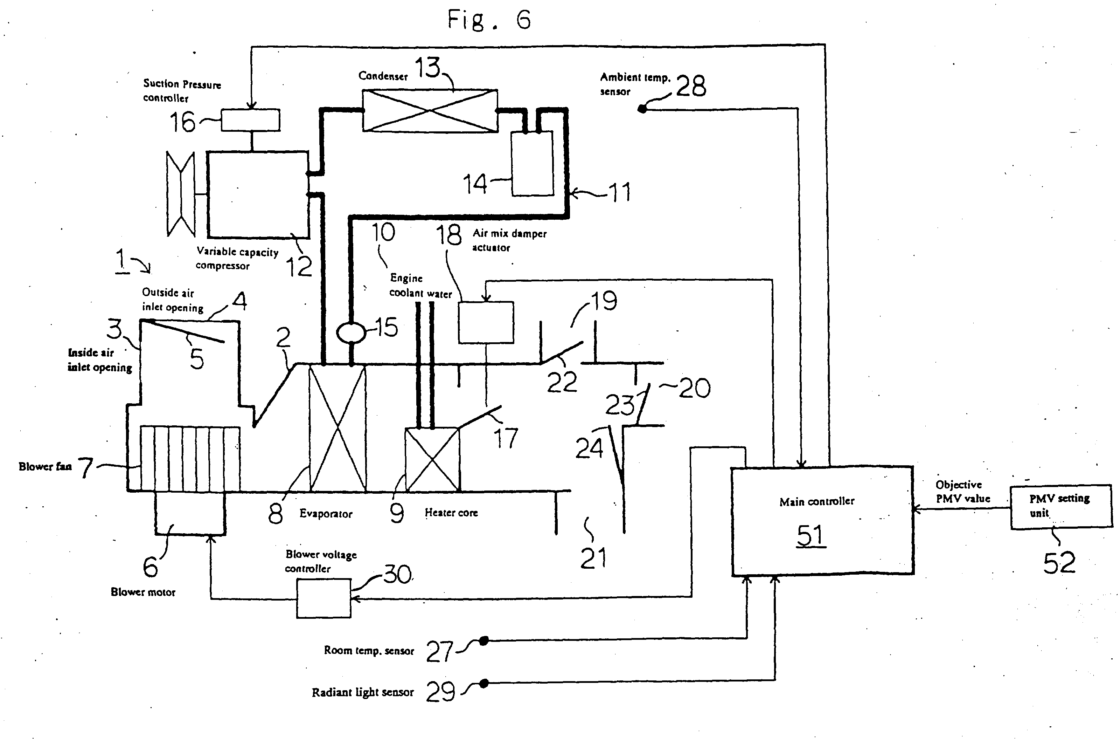

Referring to **Fig. 6**, a diagram of an air conditioning apparatus 1 according to the second control concept 70 of the present invention is shown. Because like numbers are used to represent like parts of **Fig. 1**, an explanation of these parts is omitted. For a thermal perception index, the PMV value is employed. In this figure, PMV setting unit 52 is connected to main controller 51. The processes of main controller 51 will be further described below.

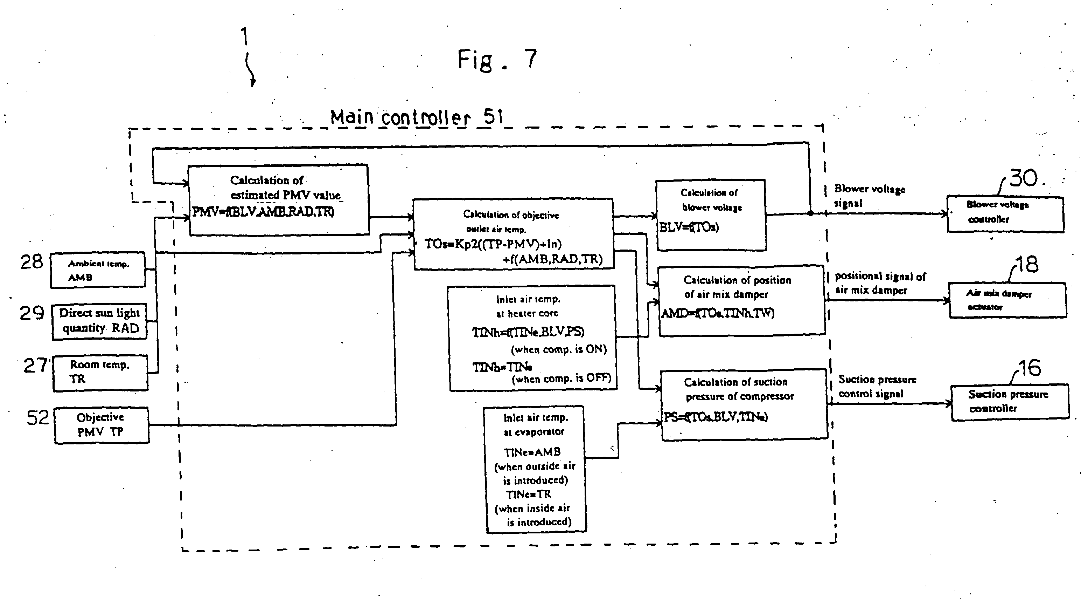

Referring to **Fig. 7**, a signal processing chart of an air conditioning apparatus of **Fig. 6** is shown. Ambient temperature sensor 28 sends ambient temperature signal AMB to main controller 51. Radiant light sensor 29 sends direct sunlight quantity signal RAD to main controller 51. Room temperature sensor 27 sends room temperature signal TR to main controller 51. Using the above signals, main controller 51 computes an estimated PMV value according to the following approximation equation:

$$PMV = aTR + bAMB + cRAD + dBLV + e \qquad (5)$$

where a, b, c, d, and e are constants, and BLV is a value obtained in the previous computational cycle. PMV setting unit 52 sends an objective PMV signal TP to main controller 1. Based on the difference between the estimated PMV value obtained by equation (5) and the objective PMV value TP, objective outlet air temperature TOS is calculated according to the following equation:

$$TOS = Kp2((TP-PMV)+In)+gAMB+hRAD+iTR+j \qquad (6)$$

where Kp2(TP-PMV) is a proportional action term, and Kp2, g, h, i, and j are constants. The "In" is an integral action term, given by the following equation:

$$In = In\text{-}1 + (delta/Ki)(TP-PMV) \qquad (7)$$

where In-1 is a value obtained in a previous computational cycle, delta is a time period for one computational cycle, and Ki is a constant.

Based on the objective outlet air temperature TOS, the control signals to the three controllers are calculated. The output signal BLV to blower voltage controller 30 is calculated by:

$$BLV = f(TOS) \tag{8}$$

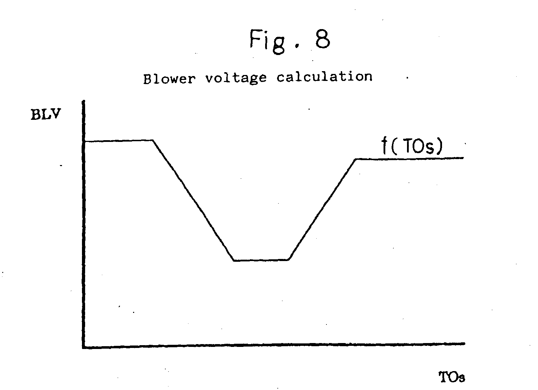

where f is an appropriately designed function, one of which is illustrated in **Fig. 8**. The output signal AMD to air mix damper actuator 18 is calculated by:

$$AMD = f(TOS, TINh, TW) \tag{9}$$

where f is an appropriately designed function,, such as (TOs-TINh)/(TW-TINh). TW is the engine coolant water temperature. TINh is defined by:

$$TINh = f(TINe, BLV, PS) \quad \text{when the compressor is ON,}$$

$$TINe \quad \text{when the compressor is OFF.} \tag{10}$$

where f is an appropriately designed function, which may be linear in TINe, BLV, and PS, and has positive dependence on all, and BLV is given by equation **(8)**, and PS is given by equation **(12)**, below.

Further, TINe is defined by:

$$TINe = AMB \quad \text{when outside air is introduced,}$$

$$TR \quad \text{when inside air is introduced.} \tag{11}$$

Lastly, the output signal PS to suction pressure controller 16 is calculated by:

$$PS = f(TOS, BLV, TINe) \tag{12}$$

where f is an appropriately designed function, which may be linear in TOS, BLV, and TINe, and has negative dependence on TINe.

Constants a, b, c, d, e, g, h, i, j, Ki, Kp1, Kp2, and delta may be defined as shown in **Table 1**:

Table 1

| Constants | Range of Values | Meaning |
|---|---|---|
| a | about 0. 1 to about 0.5 | Room temperature dependence |
| b | about 0.0 to about 0.1 | Ambient temperature dependence |
| c | about 0.2 to about 0.8 | Direct sunlight dependence |
| d | about-0.5 to about 0.0 | Blower intensity dependence |
| e | about-20 to about +20 | Total offset |
| g | about 0.0 to about 0. 1 | Ambient temperature dependence |
| h | about 0.2 to about 0.8 | Direct sunlight dependence |
| i | about 0. 1 to about 0.5 | Room temperature dependence |
| j | about-20 to about +20 | Total offset |
| Ki | about 200 to about 800 | Sensitivity parameter ofthe integral action term |
| Kp1 | about 4 to about 20 | Determinant of controllability |

Table 1   (continued)

| Constants | Range of Values | Meaning |
|---|---|---|
| Kp2 | about 4 to about 20 | Determinant of controllability |
| delta | about 0. 1 to about 4 | Period of one computation cycle |

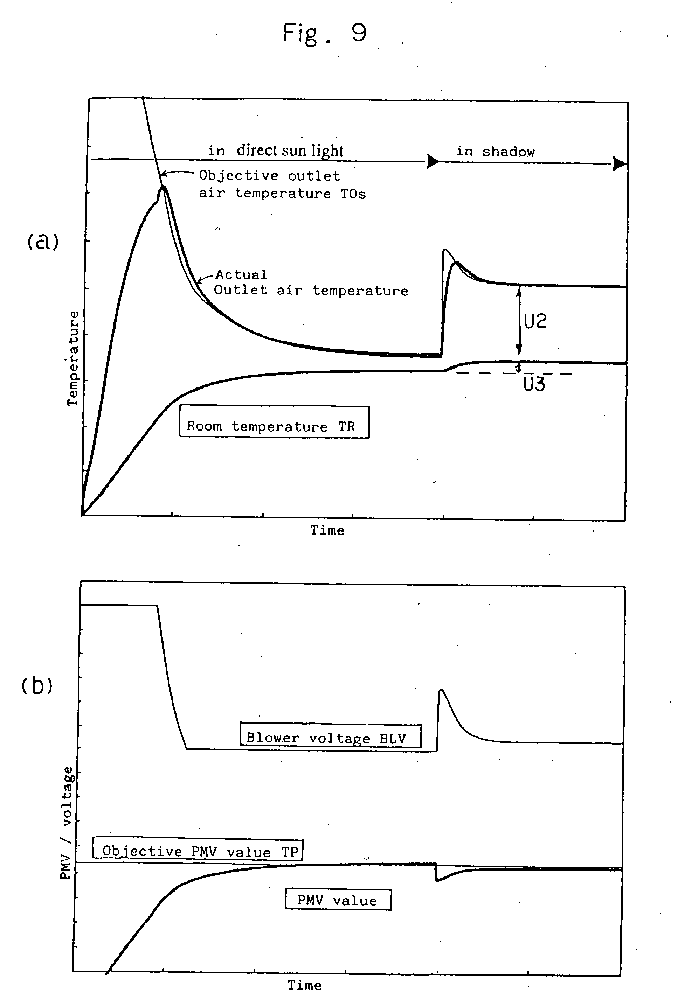

Air conditioning apparatus 1 according to the present invention shows a response characteristic, illustrated in **Fig. 9**. From the upper bold curve in **Fig. 9(a)**, the actual outlet air temperature rises more than in known air conditioning apparatus I' when the vehicle moves from direct sunlight and into the shadows (compare U1 in **Fig. 3(a)** and U2 in **Fig. 9(a)**.) As a result, room temperature TR indicated by the lower bold curve in **Fig. 9(a)** rises slightly (indicated by U3). Nevertheless, the actual PMV value does not deviate substantially in response to a change in external condition, as seen from the bold curve in **Fig. 9(b)**. Therefore, the passenger senses little or no change in thermal perception In other words, even if the vehicle goes into shadow from direct sunlight, the passenger does not feel cooler because the control mechanism increases the room temperature by an appropriate amount.

Thus, according to the present invention, because the passenger's thermal perception (i.e., the PMV value) is controlled first, it is possible to maintain a truly comfortable feeling for the passenger, even if external conditions change.

Though a PMV value is adopted as a thermal perception index in an air conditioning apparatus, illustrated in **Fig. 6**, this invention is not restricted thereto. For example, action temperature, equivalent temperature, effective temperature, or new effective temperature may be employed as substitutes for a thermal perception index. In that case, equation **(5)** should be replaced by a corresponding equation.

Additionally, it may be sufficient for the PMV setting unit of an air conditioning apparatus of the present invention to have a range of from about -1.5 to about +1.5. In order to mirror a known temperature setting unit, either in Celsius or Fahrenheit, any appropriate scale may be used on the PMV setting unit. An example of such a scale may be about +18 to about +32, where about +18 is equivalent to about a -1.5 PMV value, about +25 is equivalent to about a 0 PMV value, and about +32 is equivalent to about a +1.5 PMV value. Other scales, such as from about +65 to about +95, for example, may also be used.

This invention has been described in detail in connection with the preferred embodiments. These embodiments, however, are merely exemplary and the invention is not restricted thereto. It will be understood by those skilled in the art that other variations and modifications can easily be made within the scope of this invention, as defined by the appended claims.

**Claims**

1.   An air conditioning apparatus for a vehicle, comprising:

a room temperature sensing means;
an air flow quantity registering means;
a thermal perception index estimation means;
a thermal perception index setting means;
a thermal perception maintaining means;
an air flow quantity regulation means; and
an outlet air temperature regulating means;

wherein said thermal perception index estimation means calculates a thermal perception index within a compartment of a vehicle using a plurality of signals from said room temperature sensing means and said air flow quantity registering means, said thermal perception maintaining means reduces a difference between the calculated thermal perception index and a set thermal perception index set in said thermal perception index setting means, by providing control signals for said air flow quantity regulating means and said outlet air temperature regulating means.

2.   The air conditioning apparatus of claim 1, wherein said thermal perception maintaining means controls said air flow quantity regulating means and said outlet air temperature regulating means, using an operation selected from the group consisting of proportional action and integral action, concerning difference between calculated thermal perception index and set thermal perception index which was set in said thermal perception index setting means.

3.   The air conditioning apparatus of claim 1, wherein said thermal perception index is calculated in said thermal perception index estimation means according to the following equation:

$$\text{Thermal perception index} = aTR+bAMB+cRAD+dBLV+e$$

where:

TR is a room temperature sensed by said room temperature sensing means;
AMB is an ambient temperature sensed by said ambient temperature sensing means;
RAD is a quantity of direct sunlight sensed by said direct sunlight quantity sensing means;
BLV is a control quantity for said air flow quantity regulating means, and a, b, c, d, and e are constants.

4. The air conditioning apparatus of claim 3, wherein at least one of said constants has a value of zero.

5. The air conditioning apparatus of claim 1, wherein said air flow quantity regulating means comprises:

a blower; and
a blower voltage controller.

6. The air conditioning apparatus of claim 1, wherein said outlet temperature regulating means comprises:

an evaporator in a refrigerant circuit;
heater core through which engine coolant water circulates; and
an air mix damper having an air mix damper actuator.

7. The air conditioning apparatus of claim 1, wherein said thermal perception index setting means has a corresponding temperature scale, said corresponding temperature scale selected from the group consisting of Celsius temperature scale and a Fahrenheit temperature scale.

8. An air conditioning apparatus for a vehicle, comprising:

a room temperature sensing means;
an air flow quantity registering means;
a direct sunlight quantity sensing means;
an ambient temperature sensing means;
a thermal perception index estimation means;
a thermal perception index setting means;
a thermal perception maintaining means;
an air flow quantity regulating means: and
an outlet air temperature regulating means;

wherein said thermal perception index estimation means calculates a thermal perception index within a compartment of a vehicle using a plurality of signals from said room temperature sensing means, said air flow quantity registering means, said direct sunlight quantity sensing means, and said ambient temperature sensing means, said thermal perception maintaining means minirnizing a difference between the calculated thermal perception index and a set thermal perception index, set in said thermal perception setting means, by providing control signals for said air flow quantity regulating means and said outlet air temperature regulating means.

9. The air conditioning apparatus of claim 8, wherein said thermal perception maintaining means controls said air flow quantity regulating means and said outlet air temperature regulating means, using an operation selected from the group consisting of proportional action and integral action, concerning difference between calculated thermal perception index and set thermal perception index which was set in said thermal perception index setting means.

10. The air conditioning apparatus of claim 8, wherein said thermal perception index is calculated in said thermal perception index estimation means according to the following equation:

$$\text{Thermal perception index} = aTR+bAMB+cRAD+dBLV+e$$

where:

TR is a room temperature sensed by said room temperature sensing means;
AMB is an ambient temperature sensed by said ambient temperature sensing means;
RAD is a quantity of direct sunlight sensed by said direct sunlight quantity sensing means;
BLV is a control quantity for said air flow quantity regulating means, and a, b, c, d, and e are constants.

**11.** The air conditioning apparatus of claim 8, wherein at least one of said constants has a value of zero.

**12.** The air conditioning apparatus of claim 8, wherein said air flow quantity regulating means comprises:

a blower; and
a blower voltage controller.

**13.** The air conditioning apparatus of claim 8, wherein said outlet temperature regulating means comprises:

an evaporator in a refrigerant circuit;
heater core through which engine coolant water circulates; and
an air mix damper having an air mix damper actuator.

**14.** The air conditioning apparatus of claim 8, wherein said thermal perception index setting means has a corresponding temperature scale, said corresponding temperature scale selected from the group consisting of a Celsius temperature scale and a Fahrenheit temperature scale

Fig. 1
(PRIOR ART)

Fig. 2
(PRIOR ART)

**Main controller 25**

1'

28 | Ambient temp. AMB

29 | Direct sun light quantity RAD

27 | Room temp. TR

26 | Objective room temp. TV

Calculation of objective outlet air temp.
$TO=Kp1(TR-TV)+f(AMB,RAD,TV)$

Inlet air temp. at heater core
$TINb=f(TINe,BLV,PS)$ (when comp. is ON)
$TINb=TINe$ (when comp. is OFF)

Inlet air temp. at evaporator
$TINe=AMB$ (when outside air is introduced)
$TINe=TR$ (when inside air is introduced)

Calculation of blower voltage
$BLV=f(TO_s)$

Calculation of position of air mix damper
$AMD=f(TO,TINb,TV)$

Calculation of suction pressure of compressor
$PS=f(TO,BLV,TINe)$

Blower voltage signal → 30 | Blower voltage controller

positional signal of air mix damper → 18 | Air mix damper actuator

Suction pressure control signal → 16 | Suction pressure controller

# Fig. 3
## ( PRIOR ART )

(a)

- in direct sun light
- in shadow
- Objective outlet air temperature TOs
- Actual Outlet air temperature
- Objective room temperature TV
- Room temperature TR
- U1
- Temperature
- Time

(b)

- Blower voltage BLV
- Objective PMV value
- D1
- PMV value
- PMV/voltage
- Time

Fig. 4

60

| 61 Room temperature sensor | Room temperature | 64 Thermal perception index estimation unit | Current thermal perception index | .New blower voltage | 66 Air flow quantity regulation means |

| 62 Air flow quantity (Blower voltage register) | Blower voltage | | | 65 Thermal perception maintaining unit | 67 Outlet air temperature regulation means |

| 63 Objective thermal Perception index setting unit | | set index | |

Fig. 5

## Fig. 6

Suction Pressure controller **16**

Condenser **13**

Ambient temp. sensor **28**

**14**

**11**

**1**

Variable capacity compressor **12**

Air mix damper actuator

Outside air inlet opening **4**

**3**

Inside air inlet opening **5**

Engine coolant water

**10**

**18**

**19**

**2**

**15**

**22**

**23**

**20**

**24**

**17**

Blower fan **7**

**8** Evaporator

**9** Heater core

**21**

Main controller **51**

Objective PMV value

PMV setting unit

**52**

**6**

Blower motor

Blower voltage controller **30**

Room temp. sensor **27**

Radiant light sensor **29**

EP 0 872 368 A2

15

EP 0 872 368 A2

# Fig. 7

1

Main controller 51

| Box | Content |
|---|---|

Calculation of estimated PMV value
$PMV = f(BLV, AMB, RAD, TR)$

Calculation of objective outlet air temp.
$TOs = Kp2((TP-PMV)+In) + f(AMB, RAD, TR)$

Calculation of blower voltage
$BLV = f(TOs)$

28  Ambient temp. AMB

29  Direct sun light quantity RAD

27  Room temp. TR

52  Objective PMV TP

Inlet air temp. at heater core
$TINh = f(TINe, BLV, PS)$ (when comp. is ON)
$TINh = TINe$ (when comp. is OFF)

Calculation of position of air mix damper
$AMD = f(TOs, TINh, TW)$

Inlet air temp. at evaporator
$TINe = AMB$ (when outside air is introduced)
$TINe = TR$ (when inside air is introduced)

Calculation of suction pressure of compressor
$PS = f(TOs, BLV, TINe)$

Blower voltage signal

30  Blower voltage controller

positional signal of air mix damper

18  Air mix damper actuator

Suction pressure control signal

16  Suction pressure controller

# Fig. 8

Blower voltage calculation

## Fig. 9

(a)

in direct sun light      in shadow

Objective outlet
air temperature TOs

Actual
Outlet air temperature

U2

U3

Room temperature TR

Temperature

Time

(b)

Blower voltage BLV

Objective PMV value TP

PMV value

PMV / voltage

Time